# EUROPÄISCHE PATENTSCHRIFT

(11) **EP 0 554 544 B1**
(45) Veröffentlichungstag und Bekanntmachung des Hinweises auf die Patenterteilung: **17.05.1995**
(21) Anmeldenummer: 92121050.6
(22) Anmeldetag: 10.12.1992
(51) Int. Cl.: B60K 25/00, F02B 37/04, F16H 47/04

(54) **Kraftfahrzeug mit mittels Abgasturbolader aufladbarer Brennkraftmaschine und hydrostatisch-mechanischem Antrieb der Nebenaggregate**
Vehicle with an exhaust gas turbo charger supercharged internal combustion engine and hydrostatic-mechanical driven auxiliary aggregates
Véhicules avec machine à combustion interne suralimentable à l'aide d'une turbosoufflante à gaz d'échappement et commande hydrostatique-mécanique des agrégats auxiliaires

(30) Priorität: 07.02.1992 DE 4203528; 18.04.1992 DE 4212984
(43) Veröffentlichungstag der Anmeldung: 11.08.1993
(73) Patentinhaber: MAN Nutzfahrzeuge Aktiengesellschaft, 80976 München (DE)
(72) Erfinder: Hagin, Faust, Dipl.-Ing., W-8000 München 2 (DE); Drewitz, Hans, Dipl.-Ing. (FH), W-8000 München 40 (DE)

(56) Entgegenhaltungen:
- EP-A- 0 087 316
- DE-A- 3 529 743
- DE-A- 4 015 374
- DE-C- 3 532 938
- US-A- 4 312 183

## Beschreibung

Die Erfindung betrifft ein Kraftfahrzeug mit Merkmalen der im Oberbegriff des Anspruchs 1 angegebenen Art.

Die Erfindung geht aus von der DE 40 15 374 A1, die einen hydrostatisch-mechanischen Antrieb von Nebenaggregaten eines Kraftfahrzeuges offenbart, wobei die Nebenaggregate einzeln oder gruppenweise mechanisch durch einen Hydrostatmotor antreibbar sind, der von einer vom Antriebsstrang der Antriebseinrichtung her angetriebenen Pumpe gespeist wird. Obschon in dieser Vorveröffentlichung nichts darüber ausgesagt ist, wird dabei davon ausgegangen, daß die Antriebseinrichtung auch aus einer mittels Abgasturbolader aufladbaren Brennkraftmaschine bestehen kann.

Bei solchermaßen aufgeladenen Brennkraftmaschinen besteht unabhängig davon, ob es sich um einen Diesel- oder Ottomotor handelt, nach wie vor das Problem des sogenannten Turboloches, das insbesondere beim Anfahren und Beschleunigen des Fahrzeuges, also immer dann entsteht, wenn die Brennkraftmaschine rasch in Bereiche höherer Leistung beschleunigt werden soll.

Zur Vermeidüng dieses Turboloches sind schon verschiedene Lösungen vorgeschlagen worden, z.B. ein mechanischer, übersetzungsvariabler Antrieb des Abgasturboladers vom Motor her oder ein separates Druckluftsystem zur Drucklufteinblasung in den Abgasturbolader. Im Fall des zusätzlichen mechanischen Antriebes des Turboladers ergibt sich der Nachteil einer strengen räumlichen Abhängigkeit des betreffenden Antriebes. Im Fall der Drucklufteinblasung ist als ein Nachteil der schlechte Wirkungsgrad der Druckumwandlungen und außerdem der große räumliche Bedarf des Druckluftsystems zu nennen.

Es ist daher Aufgabe der Erfindung, ein Kraftfahrzeug zu schaffen, deren mittels Abgasturbolader aufgeladener Brennkraftmaschine eine solche Einrichtung zuzuordnen ist, die zumindest zur Vermeidung des Turboloches beiträgt, vorzugsweise auch weiteren Zusatznutzen erbringt.

Diese Aufgabe ist erfindungsgemäß durch die kennzeichnenden Merkmale des Anspruches 1 in Verbindung mit deren Verwendung bei einem Kraftfahrzeug gemäß dem Oberbegriff des Anspruchs 1 gelöst.

Vorteilhafte Weiterbildungen und Ausgestaltungen dieser Lösung sind in den Unteransprüchen angegeben.

Die Erfindung fußt dabei auf der Erkenntnis, daß es gerade bei einem Kraftfahrzeug der gattungsgemäßen Art mit vergleichsweise einfachen Mitteln möglich ist, das insbesondere beim Anfahren und Beschleunigen des Fahrzeuges auftretende Turboloch weitestgehend zu eliminieren. Dabei wird erfindungsgemäß der hydrostatische Teil des hydrostatisch-mechanischen Antriebes der Nebenaggregate des Fahrzeuges herangezogen und durch eine als Motor oder Pumpe betreibbare Hydrostatmaschine ergänzt, die den im Kennzeichen des Anspruchs 1 angegebenen Merkmalen gehorcht. Mit dieser zusätzlichen Hydrostatmaschine ist es somit möglich, beim Anfahren und Beschleunigen des Fahrzeuges den Abgasturbolader rasch zu beschleunigen. Andererseits besteht über diese Hydrostatmaschine die Möglichkeit, bei Abgasenergieüberschuß die über den Abgasturbolader zugeführte Antriebsenergie in Zusatzenergie für den Antrieb der Nebenaggregate und/oder der Brennkraftmaschine umzusetzen. Letzteres erweist sich als wesentlich effektiver als das bekannte Scania-Verfahren, bei dem zur Ausnutzung von Abgasüberschußenergie eine zusätzlich zum Abgasturboladerangeordnete Nutzturbine vorgesehen ist, die über einen mechanischen Triebstrang mit hydrodynamischem Wandler auf die Motorwelle wirkt. Abgesehen von den Unterbringungs- und Anordnungsproblemen für die Nutzturbine und den zugehörigen Triebstrang bewirkt dieser in der Regel auch Schleppverluste zumindest in Teilbereichen des Fahrzeugbetriebes, welche sich leistungsmindernd auswirken.

Der Hydrostatmotor kann durch einen Konstantmotor gebildet sein, dessen Leistung für den Antrieb der Nebenaggregate über eine Bypaßleitung mit eingebauter, entsprechend verstellbarer Drossel regelbar ist. Alternativ hierzu kann auch ein zwischen Minimum und Maximum verstellbarer Hydrostatmotor für Antrieb und Betriebsregelung der Nebenaggregate vorgesehen sein. Der verstellbare Hydrostatmotor ist zwar gegenüber einem Konstanthydrostatmotor teurer, jedoch relativieren sich diese Mehrkosten durch den Entfall der Bypaßleitung mit der in sie eingebauten regelbaren Drossel und der gegebenenfalls in Verbindung mit dieser notwendigen Ölkühler.

Nachstehend ist die erfindungsgemäße Lösung anhand zweier in der Zeichnung dargestellter Ausführungsbeispiele näher erläutert. In der Zeichnung zeigen:
- Fig. 1 und 2: je eine Schemazeichnung einer Ausführubngsform der erfindungsgemäßen Lösung, und
- Fig. 3: eine Ausführungsform des mechanischen Teils des hydrostatisch-mechanischen Antriebes der Nebenaggregate des Fahrzeugs.

In den Figuren sind gleiche bzw. einander entsprechende Teile mit gleichem Bezugszeichen angezogen.

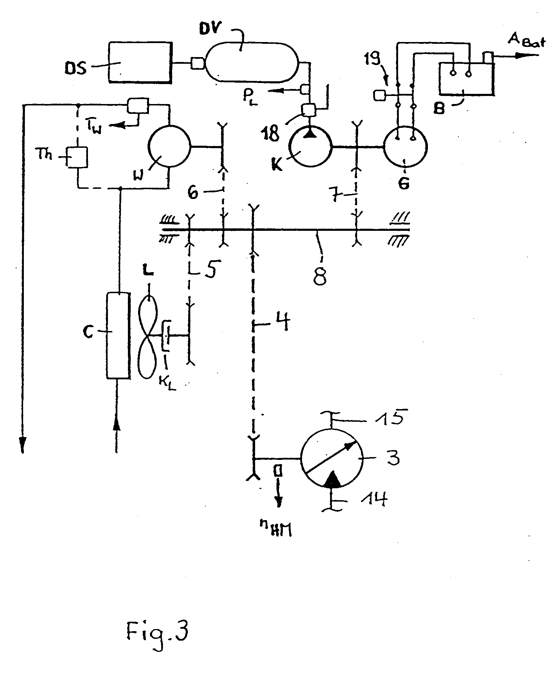

Das Kraftfahrzeug, bei dem es sich beispielsweise um einen Lastkraftwagen oder Omnibus handeln kann, besitzt eine aus einer mittels Abgasturbolader 2 aufladbaren Brennkraftmaschine (z.B. Diesel- oder Ottomotor) und einem Getriebe bestehende Antriebseinrichtung 1. Darüber hinaus verfügt das Kraftfahrzeug über einen hydrostatisch-mechanischen Antrieb der Nebenaggregate NA, bei denen es sich, wie aus Fig. 3 ersichtlich, um den eine Batterie B speisenden Generator G, einen das fahrzeuginterne Druckluftsystem DS mit Druckluft versorgenden Druckluftvorratsbehälter DV speisenden Kompressor K, einen einem Kühleraggregat C zugehörigen Lüfter L und eine im Kühlmittelkreislauf des Verbrennungsmotors wirkende Kühlmittel (Wasser)- Pumpe W, gegebenenfalls - soweit vorhanden - auch einen Klimakompressor und/oder die Pumpe (n) einer Arbeitsgerätschaft zum Heben, Senken oder dergleichen handelt.

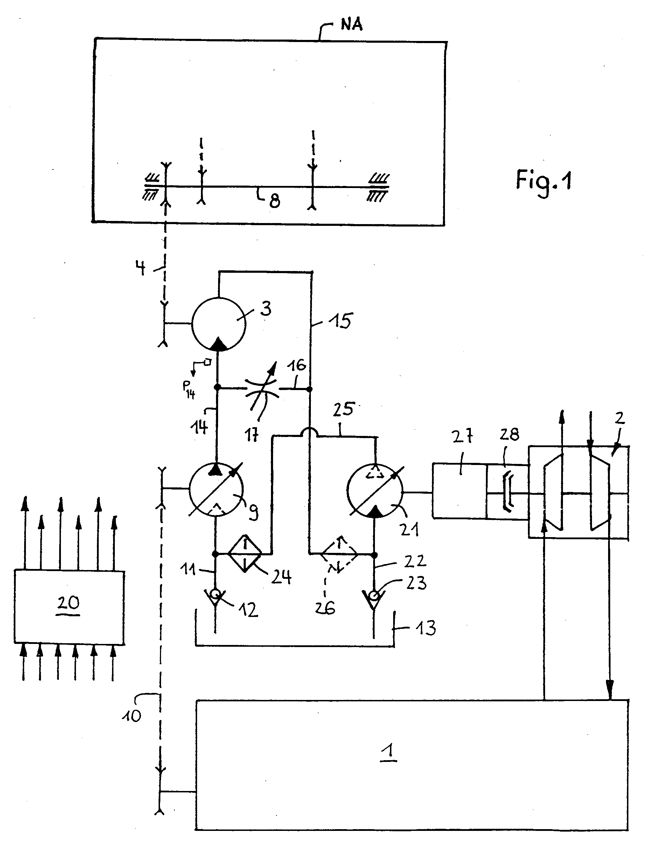

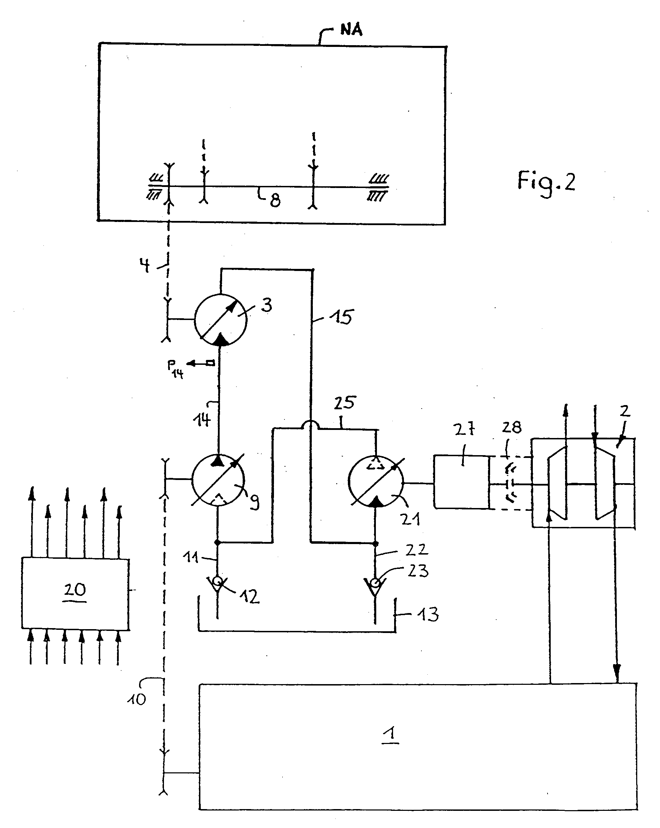

Die in Fig. 1 und 2 unter der Bezeichnung NA zusammengefaßten Nebenaggregate des Kraftfahrzeugs - Kompressor K, Generator G, Lüfter L, Kühlmittelpumpe W - gegebenenfalls auch die weiteren genannten, sind mechanisch von einem Hydrostatmotor 3 aus antreibbar, und zwar jeweils einzeln oder gruppenweise über entsprechende mechanische Verbindungen bzw. Transmissionen, die zum Beispiel durch Riementriebe 4, 5, 6, 7, gegebenenfalls - wie in Fig. 2 dargestellt - unter Zwischenschaltung einer Nebenwelle 8 realisierbar sind. Die Riementriebe 4, 5, 6, 7 bilden zusammen mit der Nebenwelle 8 den mechanischen Teil des hydrostatisch-mechanischen Antriebs der Nebenaggregate NA.

Der hydrostatische Teil des hydrostatisch-mechanischen Antriebs der Nebenaggregate NA umfaßt als wesentliche Bestandteile den besagten Hydrostatmotor 3 und eine Pumpe 9, die ihrer Bauart nach auch als Motor betreibbar sowie hinsichtlich Förderdruck und/oder -volumen regelbar ist. Die über einen Triebstrang 10 von der Antriebseinrichtung 1 her angetriebene Pumpe 9 saugt Öl über eine Saugleitung 11 mit eingebautem, in Saugrichtung durchlässigem Rückschlagventil 12 aus einem Vorratstank 13 und fördert Drucköl über eine Druckleitung 14 zum Hydrostatmotor 3, der durch diesen zugeführten Druckölstrom angetrieben wird. Die Ausgangsleitung des Hydrostatmotors 3 ist mit 15 bezeichnet.

Im Fall gemäß Fig. 1 ist der Hydrostatmotor 3 durch einen Konstantmotor gebildet. Eine Regelung des Betriebes der Nebenaggregate NA durch Einflußnahme auf die Leistung des Konstant-Hydrostatmotors wird dabei dergestalt bewirkt, daß dieser durch eine Bypaßleitung 16 mit eingebauter, verstellbarer Drossel 17 zwischen Druckleitung 14 und Ausgangsleitung 15 umgehbar ist, wobei die Größe des Förderdruckes und -volumensdurch entsprechende Einstellung der Drossel 17 regelbar ist.

Im Fall gemäß Fig. 2 dagegen kann auf besagte Bypaßleitung 16 verzichtet werden, weil der Hydrostatmotor 3 selbstfür eine Leistungsregelung zwischen einem Minimum und Maximum verstellbar ist.

Um einen bedarfsoptimierten Betrieb der Nebenaggregate NA zu erreichen, ist außer einer entsprechenden Regelung des Druckölförderstromes durch entsprechende Ein- bzw. Verstellung der Drossel 17 (Fig. 1) bzw. des Hydrostatmotors 3 (Fig. 2) für einen geregelten Antrieb der Nebenaggregate NA auch eine bedarfsgerechte Lastzu- bzw. -Abschaltung der letzteren anzustreben. Dabei kann der notwendige Arbeitsdruck des Ölförderstromes beispielsweise durch Last-Abschaltung oder Abkopplung des Generators G und/oder Kompressors K begrenzt werden. Außerdem ist es möglich, im Antriebsstrang des Lüfters L eine schaltbare Viskokupplung K _{L} (wie in Fig. 3 dargestellt) vorzusehen, mit der der Lüfter L nur bei entsprechendem Bedarf an den Antriebsstrang anschließbar, ansonsten jedoch von letzterem abgekoppelt ist. Auch die Kühlmittelpumpe W kann hinsichtlich ihres Fördervolumens durch einen thermostatischen Regelkreis (Thermostat Th, Temperaturfühler Tw, wie in Fig. 3 dargestellt) oder durch mechanische Vorkehrungen im Antriebsstrang geregelt werden. Ferner kann der Druckluft-Kompressor K mittels eines Schaltventiles 18 durch Umschaltung des letzteren auf Ablaß in Atmosphäre mit Minimalförderleistung betrieben (wie in Fig. 3 dargestellt) oder durch Vorsehen einer schaltbaren Kupplung vom Antriebsstrang 7 getrennt werden. Ebenso kann der die Batterie B speisende Generator G über eine Schalteinrichtung 19 abgeschaltet (wie in Fig. 3 dargestellt) oder mittels einer schaltbaren Kupplung vom Antriebsstrang 7 getrennt werden. In gleicher Weise wären auch andere Nebenaggregate, z.B. ein Klimakompressor (falls vorhanden) zu bzw. abschaltbar bzw. an- und abkoppelbar. Für das betreffende Management dieser Vorgänge im Sinne eines bedarfsoptimierten Antriebes der Nebenaggregate NA sorgt eine elektronische Regel- und Steuereinrichtung 20. Diese besitzt eine Ein- und Ausgabeperipherie sowie wenigstens einen Mikroprozessor, Daten- und Programmspeicher, welche Komponenten intern über ein Daten-Bus-System miteinander verknüpft sind. Sie stellt anhand ihrer signalisierter Istzustände (Batterieladung A _{Bat}, Druck P_{L} im Druckluftvorratsbehälter DV, Kühlwassertemperatur T_{W}, Drehzahl n _{HM} des Hydrostatmotors 3, Druck P₁₄ in Förderleitung 14 und dergleichen mehr soweit für Regelung erforderlich) einen Bedarf per Programm durch Vergleich mit abgespeicherten Sollwerten fest und gibt dann Befehle für entsprechende Maßnahmen an die angeschlossenen Organe aus. Die Regel- und Steuereinrichtung 20 übernimmt jedoch auch weitere Regel- und Steuervorgänge, auf die weiter hinten noch näher eingegangen ist.

Gemäß der Erfindung ist der hydrostatische Teil des hydrostatisch-mechanischen Antriebes der Nebenaggregate NA durch eine als Motor oder Pumpe betreibbare Hydrostatmaschine 21 ergänzt. Diese Hydrostatmaschine 21 steht eingangsseitig über eine Saugleitung 22 mit eingebautem, in Saugrichtung durchlässigem Rückschlagventil 23 mit dem Vorratstank 13 sowie mit der Ausgangsleitung 15 des Hydrostatmotors 3 in Verbindung, wobei letztere strömungsmäßig zwischen Rückschlagventil 23 und Hydrostatmaschine 21 in die Saugleitung 22 einmündet. Ausgangsseitig ist die Hydrostatmaschine 21 über eine Verbindungsleitung 25 mit dem saugseitigen Eingang der Pumpe 9 verbunden. Die Verbindungsleitung 25 mündet dabei zwischen Rückschlagventil 12 und Pumpe 9 in die Saugleitung 11 ein. In die Verbindungsleitung 25 oder alternativ die Ausgangsleitung 15 ist im Beispiel gemäß Fig. 1 ein Druckölkühler 24 bzw. 26 eingebaut.

Die Hydrostatmaschine 21 ist über ein ins Schnelle übersetzendes Planetengetriebe 27 und eventuell eine Schaltkupplung 28 an der Welle des Abgasturboladers 2 wirksam. Die Regel- und Steuereinrichtung 20 bewirkt über die vorstehend schon erwähnten Maßnahmen hinaus auch eine Ein- bzw. Verstellung der Pumpe 9, Hydrostatmaschine 21 und Betätigung der Schaltkupplung 28 (soweit vorhanden). Den Organen 2, 9, 21 sind vorzugsweise Drehzahlsensoren zugeordnet, über die die Regel- und Steuereinrichtung 20 die entsprechenden Istdrehzahlen gemeldet bekommt.

Aufgrund dieser Mittel ist mit der Hydrostatmaschine 21 in Verbindung mit dem hydrostatischen Teil des hydrostatisch-mechanischen Antriebes der Nebenaggregate NA folgende Betriebsweise erzielbar:
1. Beim Anfahren und Beschleunigen des Fahrzeuges wird die Pumpe 9 auf höheres Fördervolumen eingestellt, wodurch die in diesem Fall als Motor betriebene Hydrostatmaschine 21 den Abgasturbolader 2 extrem schnell auf eine solch hohe Drehzahl beschleunigt, daß die für die Aufladung der Brennkraftmaschine erforderliche Ladeluft mit entsprechendem Ladedruck praktisch unverzögert bereitstellbar ist. Die Hydrostatmaschine 21 erhält dabei ihre Antriebsleistung von dem durch die Pumpe 9 überden Hydrostatmotor 3 oder die Bypaßleitung (Fig. 1) in die Ausgangsleitung 15 geförderten und ihr somit zugeführten Druckölstrom. Durch Einstellung des spezifischen Fördervolumens der Hydrostatmaschine 21 kleiner als jenes der Pumpe 9 wird ein optimales Hochpuschen der Abgasturboladerdrehzahl auch bei geringer Drehzahl der Pumpe 9 bewirkt, wodurch die Nebenaggregate NA immer angetrieben bleiben, aber deren Drehzahl durch Verstellung des Fördervolumens in umgekehrter Relation bestimmt wird (max. Fördervolumen, minimale Drehzahl der Nebenaggregate NA).
2. Im Normalfahrtbereich des Fahrzeugs, z.B. bei konstanter Geschwindigkeit und damit quasi stationär betriebener Brennkraftmaschine, ist die Hydrostatmaschine 21 von der Regel- und Steuereinrichtung 20 leistungsfrei eingestellt und gegebenenfalls über die Schaltkupplung 28 vom Abgasturbolader 2 abgekuppelt. In diesem Zustand ist ein praktisch ungehinderter Betrieb des hydrostatisch-mechanischen Antriebes der Nebenaggregate NA sichergestellt.
   In einer höheren Entwicklungsstufe kann alternativ zu vorstehender Lösung auch eine Regelung vorgesehen sein, bei der aufgrund der Fahrpedalstellung und Motordrehzahl für sämtliche Stationärbetriebspunkte des Motorkennfeldes jeweils die zugehörige optimale Drehzahl des Abgasturboladers, demzufolge auch derjeweils optimale Ladeluftdruck herbeigeführt wird.
3. Bei Abgasenergieüberschuß seitens der Brennkraftmaschine 1 versorgt die dann als Pumpe betriebene Hydrostatmaschine 21 über die dann als Motor wirkende Pumpe 9, diese entlastend, den Hydrostatmotor 3 und gegebenenfalls die Brennkraftmaschine (über den Triebstrang 10) mit zusätzlicher Energie. Das heißt, die vom Abgasturbolader 2 abgegebene überschüssige Antriebsenergie wird von der Hydrostatmaschine 21 in Verbindung mit dem angeschlossenen System in Zusatzenergie für den Antrieb der Nebenaggregate NA und/oder die Brennkraftmaschine umgesetzt.

Die Hydrostaten 9, 21 sind vorzugsweise selbst mit Druckbegrenzungskomponenten, wie Druckbegrenzungsventilen oder Rückstelleinrichtungen, ausgestattet, so daß auf sonst notwendige Druckbegrenzungsventile in den Druckleitungen verzichtet werden kann.

Mit dem vorbeschriebenen System wird somit ein Kraftfahrzeug bereitgestellt, bei dem die Nebenaggregate NA in optimaler Weise betreibbar sind, außerdem das Turboloch beim Anfahren und Beschleunigen vermeidbar und schließlich auch ein Abgasenergieüberschuß in günstiger Weise nutzbringend umsetzbar ist.

## Patentansprüche

1. Kraftfahrzeug, mit einer Antriebseinrichtung (1) bestehend aus einer mittels Abgasturbolader (2) aufladbaren Brennkraftmaschine und einem Getriebe und mit einem hydrostatisch-mechanischen Antrieb der Nebenaggregate (NA) wie Lüfter (L), Druckluftkompressor (K), Generator (G), Klimakompressor, Kühlmittelpumpe (W) und dergleichen, wobei die Nebenaggregate (NA) einzeln oder gruppenweise mechanisch durch einen von einer hinsichtlich Förderdruck und/oder -volumen regelbaren, von der Antriebseinrichtung (1) her antreibbaren Pumpe (9) gespeisten Hydrostatmotor (3) antreibbar sind, dadurch gekennzeichnet, daß der hydrostatische Teil des hydrostatisch-mechanischen Antriebs der Nebenaggregate (NA) durch eine als Motor oder Pumpe betreibbare Hydrostatmaschine (21) ergänzt ist, die
- eingangsseitig mit dem Ausgang (15) des Hydrostatmotors (3) und einem Öl-Vorratstank (13), ausgangsseitig mit dem Eingang der Pumpe (9) verbunden ist, ferner
- über ein ins Schnelle übersetzendes Planetengetriebe (27) und gegebenenfalls eine Schaltkupplung (28) an der Welle des Abgasturboladers (2) wirksam ist, und
- beim Anfahren und Beschleunigen des Fahrzeugs - als Motor betrieben - den Abgasturbolader (2) beschleunigt und bei Abgasenergieüberschuß
- als Pumpe betrieben, die den Hydrostatmotor (3) versorgende, dann als Motor betriebene Pumpe (9) entlastend - die vom Abgasturbolader (2) zugeführte Antriebsenergie in Zusatzenergie für den Antrieb der Nebenaggregate (NA) und/oder der Brennkraftmaschine umsetzt.

2. Kraftfahrzeug nach Anspruch 1, dadurch gekennzeichnet, daß die Leistung des Hydrostatmotors (3) durch eine ihn umgehende Bypaßleitung (16) mit eingebauter, verstellbarer Drossel (17) regelbar ist.

3. Kraftfahrzeug nach Anspruch 1, dadurch gekennzeichnet, daß der Hydrostatmotor (3) für Antrieb und Betriebsregelung der Nebenaggregate (NA) zwischen einem Minimum und einem Maximum verstellbar ist.

4. Kraftfahrzeug nach Anspruch 1, dadurch gekennzeichnet, daß in die mit dem Vorratstank (13) in Verbindung stehenden Saugleitungen (11, 22) der den Hydrostatmotor (3) versorgenden Pumpe (9) und der Hydrostatmaschine (21) jeweils strömungsmäßig vor dem Anschluß der Verbindungsleitung (15, 25) zwischen Hydrostatmotor (3) und Hydrostatmaschine (21) bzw. zwischen letzterer und der Pumpe (9) in Saugrichtung durchlässige Rückschlagventile (12, 23) eingebaut sind.

5. Kraftfahrzeug nach Anspruch 1, gekennzeichnet durch eine elektronische Regel- und Steuereinrichtung (20) für eine Regelung der durch den hydrostatischen Teil des hydrostatisch-mechanischen Antriebes der Nebenaggregate (NA) und der Hydrostatmaschine (21) fließenden Druckölströme in dem Sinne, daß die Brennkraftmaschine zumindest in den wichtigsten Kennfeldbereichen vom Abgasturbolader (2) in optimaler Weise aufladbar ist und die Nebenaggregate (NA) in bedarfsoptimierter Weise antreibbar sind.

6. Kraftfahrzeug nach Anspruch, 5, dadurch gekennzeichnet, daß mit der Regel- und Steuereinrichtung (20) eine solche Regelung des angeschlossenen Systems durchführbar ist, daß aufgrund der Fahrpedalstellung und Motordrehzahl für sämtliche Stationärbetriebspunkte des Motorkennfeldes jeweils die zugehörige optimale Drehzahl des Abgasturboladers und demzufolge auch optimale Ladeluftdruck herbeigeführt, gleichzeitig aber auch anhand signalisierter Istzustände und daraus festgestelltem Bedarf der Betrieb der einzelnen Nebenaggregate geregelt wird.

## Claims

1. Motor vehicle with a drive system (1) consisting of an internal combustion engine that can be turbocharged by means of an exhaust gas turbocharger (2) and a gearbox and with a hydrostatic-mechanical drive system for secondary units (NA) such as a fan (L), air compressor (K), generator (G), air-conditioning compressor, coolant pump (W) and the like, the secondary units (NA) being mechanically driveable singly or in groups by means of a hydrostatic motor (3) fed by a pump (9) that can be controlled in respect of delivery pressure and/or volume and driven from the drive system (1), characterised in that the hydrostatic part of the hydrostatic-mechanical drive for the secondary units (NA) is supplemented by a hydrostatic machine (21) that can be operated as motor or pump and
- is, on the input side, connected with the output (15) of the hydrostatic motor (3) and an oil reservoir (13) and, on the output side, with the input of the pump (9), and that also
- acts on the shaft of the exhaust gas turbocharger (2) via a planetary gear (27) transmitting to high speeds and, if necessary, a clutch (28), and,
- when operated as a motor, accelerates the exhaust gas turbocharger (2) when the vehicle is moving off and accelerating and,
- when operated as a pump in the event of an exhaust gas energy surplus, relieves the pump (9) supplying the hydrostatic motor (3) and then operated as motor, converting the drive energy supplied from the exhaust gas turbocharger (2) into additional energy for driving the secondary units (NA) and/or the internal combustion engine.

2. Motor vehicle according to Claim 1, characterised in that the output of the hydrostatic motor (3) can be controlled by means of a bypass line (16) bypassing the said hydrostatic motor (3) and equipped with an adjustable throttle (17).

3. Motor vehicle according to Claim 1, characterised in that, for driving the secondary units (NA) and controlling their operation, the hydrostatic motor (3) can be adjusted between a minimum and a maximum.

4. Motor vehicle according to Claim 1, characterised in that check valves (12, 23) permitting flow in the direction of suction are installed in each of the suction lines (11, 12) of the pump (9) supplying the hydrostatic motor (3) and of the hydrostatic machine (21), the said suction lines (11, 12) being connected with the reservoir (13), upstream of the connection of the connection line (15, 25) and between the hydrostatic motor (3) and the hydrostatic machine (21) and between the latter and the pump (9).

5. Motor vehicle according to Claim 1, characterised by an electronic control unit (20) for controlling the pressurised oil flows through the hydrostatic part of the hydrostatic-mechanical drive for the secondary units (NA) and hydrostatic machine (21) in the sense that the internal combustion engine can, at least in the most important diagram areas, be optimally charged by the turbocharger (2) and the secondary units (NA) can be driven in a manner optimally geared to their requirements.

6. Motor vehicle according to Claim 5, characterised in that the connected system can be controlled by means of the control unit (20) in such a way that, on the basis of the accelerator pedal position and engine speed, the individually associated optimum turbocharger speed and, consequently, also the optimum charge-air pressure is achieved for all stationary operating points of the engine diagram, while at the same time the operation of the individual secondary units is controlled also by means of signalled actual conditions and the requirement resulting from these.

## Revendications

1. Véhicule à moteur avec un dispositif d'entraînement (1) consistant en un moteur à comoustion interne pouvant être suralimenté au moyen d'un turbocompresseur à gaz d'échappement (2) et une boîte de vitesses et avec une transmission hydrostatique-mécanique des ensembles auxiliaires (NA), tels que soufflante (L), compresseur d'air comprimé (K), génératrice (G), compresseur de climatisation, pompe du fluide de refroidissement (W) et analogues, dans lequel les ensembles auxiliaires (NA) peuvent être entraînés séparément ou par groupes de façon mécanique par un moteur hydrostatique (3) alimenté par une pompe (9) réglable en ce qui concerne sa pression et/ou son volume de refoulement, pompe qui peut être entraînée à partir du dispositif d'entraînement (1), véhicule à moteur caractérisé en ce que la partie hydrostatique de la transmission hydrostatique-mécanique des ensembles auxiliaires (NA) est complétée par une machine hydrostatique (21) fonctionnant en moteur ou en pompe, qui
- est reliée du côté de l'entrée à la sortie (15) du moteur hydrostatique (3) et à son réservoir d'huile (13), du côté de la sortie à l'entrée de la pompe (9), en outre,
- est mise en marche au moyen d'une boîte à engrenages planétaires (27) faisant passer le mouvement en mouvement rapide et le cas échéant avec un embrayage (28) sur l'arbre du turbocompresseur (2) à gaz d'échappement et,
- lors de la mise en marche et de l'accélération du véhicule - en fonctionnement en moteur - accélère le turbocompresseur (2) à gaz d'échappement et en cas d'excédent d'énergie dans les gaz d'échappement - en fonctionnant en pompe, déchargeant la pompe (9) qui alimente le moteur hydrostatique (3), et qui fonctionne alors comme moteur - convertit l'énergie d'entraînement amenée du turbocompresseur (2) à gaz d'échappement en une énergie additionnelle qui sert à l'entraînement des ensembles auxiliaires (NA) et/ou du moteur à combustion interne.

2. Véhicule à moteur selon la revendication 1, caractérisé en ce que la puissance du moteur hydrostatique (3) peut être régulée par une conduite en dérivation (16) le contournant avec un étranglement incorporé (17) réglable.

3. Véhicule à moteur, selon la revendication 1, caractérisé en ce que le moteur hydrostatique (3) servant à l'entraînement et au réglage du fonctionnement des ensembles auxiliaires (NA) peut être réglé entre un minimum et un maximum.

4. Véhicule à moteur selon la revendication 1, caractérisé en ce que dans les conduites d'aspiration (11, 22), qui sont en liaison avec le réservoir (13), de la pompe (9) qui alimente le moteur hydrostatique (3) et de la machine hydrostatique (21) sont incorporés respectivement avant le raccordement de la conduite de liaison (15, 25) entre le moteur hydrostatique (3) et la machine hydrostatique (21) ou entre cette dernière et la pompe (9) des clapets de non retour (12, 23) qui laissent passer le fluide dans le sens de l'aspiration.

5. Véhicule à moteur selon la revendication 1, caractérisé par un système électronique de réglage et de commande (20) pour une régulation des courants d'huile sous pression qui s'écoulent à travers la partie hydrostatique de la transmission hydrostatique-mécanique des ensembles auxiliaires (NA) et de la machine hydrostatique (21), dans le sens que l'on peut charger d'une manière optimale le moteur à combustion interne avec la turbosoufflante à gaz d'échappement (2) au moins dans les zones les plus importantes du champ caractéristique et que l'on peut entraîner les ensembles auxiliaires (NA) d'une manière qui soit optimisée en fonction des besoins.

6. Véhicule à moteur selon la revendication 5, caractérisé en ce que l'on peut réaliser avec le système de réglage et de commande (20) une régulation du système qui lui est raccordé telle que sur la base de la position de la pédale d'accélérateur et de la vitesse de rotation du moteur pour l'ensemble des points de fonctionnement stationnaire du champ caractéristique du moteur, on obtienne la vitesse optimale de rotation correspondante pour le turbocompresseur à gaz d'échappement et en conséquence aussi la pression optimale pour l'air de charge mais qui soit réglé en même temps aussi, à partir des états réels signalés et des besoins qui en ressortent, le fonctionnement des différents ensembles auxiliaires.
